# EUROPÄISCHE PATENTSCHRIFT

(11) **EP 2 030 306 B1**
(45) Veröffentlichungstag und Bekanntmachung des Hinweises auf die Patenterteilung: **08.03.2017**
(21) Anmeldenummer: 07725097.5
(22) Anmeldetag: 11.05.2007
(51) Int. Cl.: H02K 5/22, H02K 7/116, H02K 11/00

(54) **ANTRIEBSEINHEIT**
DRIVE UNIT
UNITE MOTRICE

(30) Priorität: 01.06.2006 DE 202006008652 U
(43) Veröffentlichungstag der Anmeldung: 04.03.2009
(73) Patentinhaber: Brose Fahrzeugteile GmbH & Co. Kommanditgesellschaft, Coburg, Max-Brose-Straße 1 96450 Coburg (DE)
(72) Erfinder: KARSCH, Hans-Ulrich, 96271 Grub am Forst (DE); FRIEDRICH, Michael, 96450 Coburg (DE)
(74) Vertreter: FDST Patentanwälte
(86) Internationale Anmeldenummer: PCT/EP2007/004177
(87) Internationale Veröffentlichungsnummer: WO 2007/137686

(56) Entgegenhaltungen:
- DE-A1- 4 225 496
- DE-A1- 4 337 390
- GB-A- 810 977
- US-A- 5 453 649
- US-A1- 2005 280 324

## Beschreibung

Die Erfindung betrifft eine Antriebseinheit, insbesondere für ein Stellelement eines Kraftfahrzeugs, gemäß dem Oberbegriff von Anspruch 1.

Eine derartige Antriebseinheit ist beispielsweise aus der DE 43 37 390 A1 bekannt. Dort ist eine über die Kontaktierungseinheit bestromte Bürstenführung vorgesehen, die mit der Kontaktierungseinheit verbunden der Getriebeeinheit aufgesetzt wird.

Weiter ist in der EP 0 538 495 A1 ein Fensterheberantrieb mit einer Getriebeeinheit, einem Antriebsmotor und einer Kontaktierungseinheit vorgeschlagen, wobei die Kontaktierungseinheit als ein separates Bauteil mittels Führungsmittel an der Getriebeeinheit montierbar ist und wobei im montierten Zustand der als Gleichstrommotor ausgebildete Antriebsmotor über eine Bürstenplatte mit der Kontaktierungseinheit elektrisch verbunden ist und hierüber bestromt wird.

Des weiteren ist der EP 1 087 500 B1 eine Antriebseinheit, insbesondere für ein Stellelement eines Kraftfahrzeugs, bekannt, die eine Getriebeeinheit, einen Antriebsmotor und eine Kontaktierungseinheit umfasst. Dabei ist die Kontaktierungseinheit und der Antriebsmotor über einen Befestigungsflansch an die Getriebeeinheit montiert. Dabei ist die Kontaktierungseinheit mittels Schnapp-Laschen an korrespondierenden Rasthaken des Befestigungsflansches montiert. Für eine elektrische Kontaktgabe sind Durchführungsöffnungen vorgesehen.

Ferner ist aus der DE 42 25 496 eine Antriebseinheit für ein Stellelement eines Kraftfahrzeugs mit einer Getriebeeinheit, einem Antriebsmotor und einer Kontaktierungseinheit bekannt, wobei zur Bestromung des Antriebsmotors eine Zwischenzarge vorgesehen ist, die den Elektromotor und die Getriebeeinheit verbindet.

Eine Antriebseinheit der eingangs genannten Art dient beispielsweise dazu, ein Stellelement eines Kraftfahrzeugs entlang seines Stellwegs zu bewegen. Um das benötigte Drehmoment oder die gewünschte Geschwindigkeit während des Bewegens des Stellelements zu erreichen, wird die Bewegung des Antriebsmotors mittels der Getriebeeinheit in die gewünschte abtriebseitige Bewegung für das Stellelement übersetzt. Ein Stellelement eines Kraftfahrzeugs kann eine Seitenscheibe, ein Schiebedach oder eine elektrisch betätigbare Heckklappe sein. Ein solches betätigbares Stellelement ist aber auch eine elektrisch betätigbare Seitentür oder ein elektrisch verschiebbarer Kraftfahrzeugsitz.

Obschon sich die an eine Antriebseinheit für ein spezifisches Stellelement gestellten Anforderungen gleichen, ist insbesondere in der Automobilindustrie eine große Anzahl von Ausführungsvarianten erforderlich. Neben sich häufig ändernden Befestigungslagen sind es insbesondere die Anforderungen an die Steuer- oder Regelelektronik, die Änderungen in oder an der Antriebseinheit erforderlich machen.

Aufgabe der vorliegenden Erfindung ist es, eine Antriebseinheit der eingangs genannten Art so auszugestalten, dass sie möglichst einfach und kostengünstig ist.

Erfindungsgemäß wird die Aufgabe für eine Antriebseinheit gemäß den Merkmalen des Oberbegriffs von Anspruch 1 dadurch gelöst, dass dem Getriebedrehelement eine Zahnscheibe zugeordnet ist und dass der Drehsensor ein Hallsensor ist, der eine Änderung der Permeabilität bei Drehung der Zahnscheibe erfasst.

Die Erfindung geht dabei von der Überlegung aus, dass sich die in der Automobilindustrie benötigten Modellvarianten mehrheitlich in der Anordnung von Antriebsmotors und Getriebeeinheit unterscheiden. Hierzu ist in der Regel eine konstruktive Umgestaltung der Getriebeeinheit notwendig. Unter dieser Prämisse ist es sinnvoll, die Ansteuerung oder Regelung des Antriebsmotors möglichst so auszugestalten, dass diesbezüglich eine hohe Flexibilität bzw. Anpaßbarkeit erreicht wird. Dies gelingt dadurch, dass die Bestromung des mit der Getriebeeinheit verbundenen Antriebsmotors über die Schnittstellen der Getriebeeinheit erfolgt. In diesem Fall muss die Kontaktierungseinheit nämlich lediglich einen entsprechenden Bestromungsausgang aufweisen, der bei erfolgter Montage über die Schnittstellen der Getriebeeinheit den Antriebsmotor mit den entsprechenden Bestromungssignalen versorgt. Dies ermöglicht eine flexible sowohl von der Getriebeeinheit als auch von dem Antriebsmotor unabhängige Ausgestaltung der Steuer- oder Regelelektronik. Im einfachsten Fall wird hierbei der Antriebsmotor über die Kontaktierungseinheit lediglich mit einem Ein/Aus Signal versorgt. In einem anderen Fall kann eine externe Steuerung und/oder Regelung verwendet werden, die über die Kontaktierungseinheit ihre Bestromungssignale dem Antriebsmotor zuführt. Weiter ist es auch möglich, eine Steuer- und/oder Regelelektronik in die Kontaktierungseinheit zu integrieren, so dass von extern nur noch eine Energieversorgung zugeleitet werden braucht.

Ist ein die Umdrehung eines Getriebedrehelementes erfassender, mit der Kontaktierungseinheit kontaktierbarer Drehsensor vorgesehen, so braucht die Regelelektronik oder Steuerelektronik im Gegensatz zum bisher bekannten Stand der Technik konstruktiv nicht umgestaltet werden, wenn die Lage des Antriebsmotors bezüglich der Getriebeeinheit verändert ist. Denn unabhängig von der Position des Antriebsmotors wird die Drehbewegung eines Getriebedrehelementes erfasst, welche zur Regelung des Antriebsmotors herangezogen wird. Im Unterschied hierzu wird bisher die Drehbewegung des Antriebsmotors über ein ihm zugeordnetes Drehelement, insbesondere über seine Antriebsachse, erfasst. Welches Getriebedrehelement erfasst wird, ist unterheblich. Insbesondere kann es sich dabei um ein Zahnrad oder um eine Drehachse handeln.

Als Drehsensoren können prinzipiell induktive, resistive oder optische Sensoren zum Einsatz kommen. In der Automobilindustrie hat sich jedoch wegen seiner einfachen mechanischen Ausgestaltung und Robustheit als Drehsensor in Antriebssystemen von Stellelementen ein Hallsensor etabliert. Daher ist als Drehsensor ein Hallsensor eingesetzt. Üblicherweise wird die Bewegung des Antriebs eines Stellelements mittels eines Hallsensors dadurch erfasst, dass auf eine Antriebsachse oder auf ein Drehelement ein Ringmagnet mit abwechselnder Polung aufgesetzt wird. Wird jedoch eine Zahnscheibe einem Getriebedrehelement zugeordnet, so kann fertigungs- und kostengünstig auf einen Ringmagneten verzichtet werden. Die Erfassung der Drehbewegung geschieht in diesem Fall dadurch, dass sich die bei einer Drehung der Zahnscheibe periodisch ändernde Permeabilität durch den Hallsensor erfasst wird. Durch die Anzahl der Zähne kann hierdurch die Auflösung bei der Erfassung der Drehbewegung geändert werden.

In einer vorteilhaften Ausführungsform sind die Schnittstellen der Getriebeeinheit zur Bestromung des Antriebsmotors elektrisch miteinander verbunden. In diesem Fall ist die Bestromung des Antriebsmotors über die Kontaktierungseinheit in die Getriebeeinheit integriert. Der Antriebsmotor wird hierbei über die erste Schnittstelle mit der Getriebeeinheit verbunden, wobei seine Antriebsachse mit einem Getriebedrehelement in Wirkkontakt gerät und gleichzeitig sein Bestromungseingang kontaktiert wird. Über die zweite Schnittstelle wird bei Aufsatz der Kontaktierungseinheit deren Bestromungsausgang kontaktiert, so dass über die elektrische Verbindung zwischen erster und zweiter Schnittstelle die Bestromung des Antriebsmotors gewährleistet ist. Im Unterschied zu dieser Ausgestaltungsvariante ist es alternativ auch vorstellbar, die Bestromung des Antriebsmotors, d. h. die Kontaktierung seines Bestromungseinganges, über die zweite Schnittstelle vorzusehen. Insbesondere kann die Kontaktierung des Bestromungseingangs des Antriebsmotors Teil der Kontaktierungseinheit sein, die bei Montage entsprechend mit der Getriebeeinheit verbunden wird. In diesem Fall ist die Kontaktierungseinheit der Getriebeeinheit aufzusetzen, bevor der Antriebsmotor montiert wird.

Der Drehsensor kann insbesondere in die Getriebeeinheit integriert sein. In diesem Fall wird die Kontaktierungseinheit erst bei Aufsatz auf die Getriebeeinheit über die zweite Schnittstelle mit dem integrierten Drehsensor kontaktiert. Zur Erhöhung der Flexibilität hinsichtlich verschiedener Modellvarianten ist es jedoch vorteilhaft, wenn der Drehsensor an der Kontaktierungseinheit befestigt und mit dieser kontaktiert ist, und die zweite Schnittstelle der Getriebeeinheit zur Aufnahme des Drehsensors ausgebildet ist. In diesem Fall ist der Drehsensor der Kontaktierungseinheit zugeordnet und wird mit dieser an der Getriebeeinheit montiert. Dies hat den Vorteil, dass die Getriebeeinheit ohne Drehsensor herstellbar ist und dass die Kontaktierungseinheit wahlweise mit oder ohne Drehsensor für eine Komfort- bzw. Einfachansteuerung ausgebildet sein kann.

Die Zahnscheibe ist insbesondere Teil der Kontaktierungseinheit, wobei die Zahnscheibe nach der Montage der Kontaktierungseinheit mit dem Getriebedrehelement zusammenwirkt. Durch diese Maßnahme wird die Kontaktierungseinheit weiter von der Getriebeeinheit entkoppelt. So kann durch entsprechende Ausgestaltung der der Kontaktierungseinheit zugeordneten Zahnscheibe beispielsweise die Auflösung zur Messung der Drehbewegung der gewünschten Regelelektronik angepasst werden. Die Getriebeeinheit selbst ist bis auf die entsprechende Schnittstelle auf die notwendigen Getriebeelemente reduziert.

Im einfachsten Fall einer auf die Bestromung des Antriebsmotors reduzierten Kontaktierungseinheit ist diese auf den Anschluss für eine externe Speiseleitung reduziert. Die externe Steuereinheit regelt hierbei ein Ein- oder Ausschalten der über die Speiseleitung zugeführten Energieversorgung.

Wie bereits erwähnt, ist in einer vorteilhaften Ausführungsvariante eine mit dem Drehsensor verbindbare Steuer- und/oder Regelektronik in die Kontaktierungseinheit integriert. Dabei verwertet insbesondere die Regelelektronik die von dem Drehsensor ausgegebenen Ausgangssignale und steuert über den Bestromungsausgang direkt den Antriebsmotor entsprechend an. Neben dem Vorteil einer kundenspezifischen Kontaktierungseinheit, die ohne bauliche Änderung der Getriebeeinheit aufsetzbar ist, bietet diese Variante den weiteren Vorteil, dass sie aufgrund der räumlichen Nähe zwischen Steuer- bzw. Regelelektronik und Drehsensor relativ gering empfindlich für elektromagnetische Störfelder ist. Insbesondere bietet es sich hierbei an, die Entstörelemente in die Kontaktierungseinheit zu integrieren.

Die beschriebene Antriebseinheit ist insbesondere geeignet für eine Verwendung zum Antrieb eines Stellelements in einem Kraftfahrzeug. In einer vorteilhaften Ausführungsvariante wird die Antriebseinheit in einem elektrischen Fensterhebersystem eingesetzt. Insbesondere wird dabei der Antriebsmotor zum Auf- oder Abwickeln eines Seiles eingesetzt, an dem ein Befestigungselement für ein Fenster montiert ist.

Ausführungsbeispiele der Erfindung werden anhand einer Zeichnung näher erläutert. Dabei zeigen:
- Fig.1: schematisch eine Antriebseinheit mit einem Antriebsmotor, einer Kontaktierungseinheit und einer Getriebeeinheit, in die die Motorbestromung und ein Drehsensor integriert sind,
- Fig.2: schematisch eine Antriebseinheit mit einem Antriebsmotor, einer Kontaktierungseinheit und einer Getriebeeinheit, wobei die Motorbestromung und der Drehsensor der Kontaktierungseinheit zugeordnet sind,
- Fig.3: schematisch eine Antriebseinheit mit einem Antriebsmotor, einer Getriebeeinheit und einer Kontaktierungseinheit in abgeänderter Bauweise und
- Fig.4: schematisch ein Fensterhebersystem mit einer montierten Antriebseinheit.

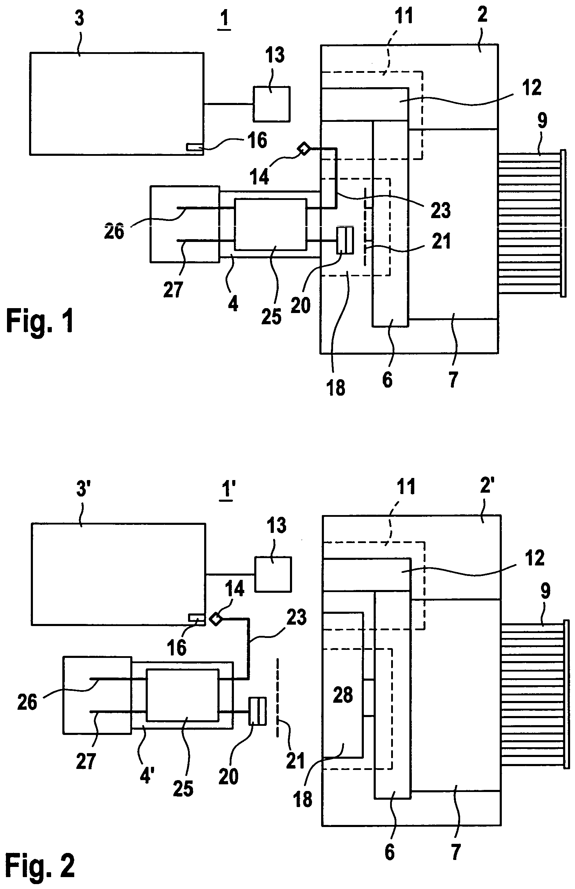

In Fig.1 ist schematisch eine Antriebseinheit 1 dargestellt, die eine Getriebeeinheit 2, einen Antriebsmotor 3 und eine Kontaktierungseinheit 4 umfasst. Die Getriebeeinheit 2 weist im Inneren ein Zahnrad 6 auf, welches über weitere Getriebeelemente 7 abtriebsseitig mit einem Vielnutprofil 9 wirkverbunden ist. Über die Getnebeeiemente 7 wird die für den Antrieb beispielsweise eines Stellelements eines Kraftfahrzeugs benötigte Übersetzung von der Antriebs- zur Abtriebsseite realisiert. Es kann sich dabei insbesondere um ein Zahnradpaket handeln. Das Vielnutprofil 9 ist zur Kopplung mit dem Abtrieb, z. B. mit der Seiltrommel eines Fensterhebers, ausgebildet.

Die Getriebeeinheit 2 umfasst weiter eine erste Schnittstelle 11, die eine Ausnehmung 12 für den Triebling 13 des Antriebsmotors 3 sowie einen Steckkontakt 14 zur Kopplung mit einem entsprechend ausgebildeten Kontaktelement 16 des Antriebsmotors 3 aufweist. Die Ausnehmung 12 ist im Zusammenspiel mit dem Zahnrad 6 derart ausgestaltet, dass der Triebling 13, ebenfalls ein Zahnrad, bei montiertem Antriebsmotor 3 mit dem Zahnrad 6 verzahnt ist. Die Art der Kopplung zwischen dem Triebling 13 und dem Zahnrad 6 kann dabei je nach gewünschter Bauform der Antriebseinheit 1 als eine Stirnrad- oder als eine Kegelradverzahnung ausgestaltet sein.

Ist der Antriebsmotor 3 auf der Getriebeeinheit 2 montiert, so treibt der Triebling 13 das Zahnrad 6 und damit das Getriebe an; zudem ist der Bestromungseingang des Antriebsmotors 3 über das Kontaktelement 16 elektrisch mit Steckkontakt 16 verbunden. Die Befestigung des Antriebsmotors 3 an der Getriebeeinheit 2 kann dabei in bekannter Art und Weise, beispielsweise mittels Verschraubung, Verrastung oder Verklemmung vorgenommen sein.

Zusätzlich umfasst die Getriebeeinheit 2 eine zweite Schnittstelle 18, die zur Ankopplung der Kontaktierungseinheit 4 dient. Mittels der zweiten Schnittstelle 18 wird ein in die Getriebeeinheit 2 integrierter Hallsensor 20 mit der Kontaktierungseinheit 4 verbunden. Der Hallsensor 20 wirkt hierbei mit einer Zahnscheibe 21 zusammen, die in der Getriebeeinheit 2 bereits auf dem Zahnrad 6 vormontiert ist. Bei einer Drehung des Zahnrads 6 wandert die Zahnscheibe 21 mit ihren Zähnen an dem Hallsensor 20 entlang, so dass dieser eine sich periodisch im Takt der Zähne ändernde Permeabilität detektiert.

Die zweite Schnittstelle 18 beinhaltet ferner eine elektrische Verbindung 23, die den Bestromungsausgang der Kontaktierungseinheit 4 über die erste Schnittstelle 11 mit dem Steckkontakt 14 elektrisch verbindet.

Wird die Kontaktierungseinheit 4 auf die Getriebeeinheit 2 montiert, so ist die in die Kontaktierungseinheit 4 integrierte Regeleinheit 25 sowohl über den Steckkontakt 14 mit dem Bestromungseingang des Antriebsmotors 3 als auch mit dem Ausgang des Hallsensors 20 verbunden. Die Regeleinheit 25 regelt über den Steckkontakt 14 den Antriebsmotor 3 auf eine gewünschte Umdrehungszahl, wobei die vom Hallsensor 20 mittels der Zahnscheibe 21 erfasste Umdrehung des Zahnrads 6 als eine Regelgröße herangezogen wird. Die Kontaktierungseinheit 4 weist als externe Anschlüsse einen Steckeranschluss 26 zur Bestromung und einen Steckeranschluss 27 für eine externe Steuerung auf. Somit regelt die Regelelektronik 25 den Antriebsmotor 3 auf die den über den Steckeranschluss 27 erhaltenen Steuersignalen entsprechende Drehgeschwindigkeit.

In Fig. 2 ist wiederum schematisch eine gegenüber der in Fig. 1 gezeigten Antriebseinheit 1 abgewandelte Antriebseinheit 1' dargestellt. Wiederum umfasst die Antriebseinheit 1' eine Getriebeeinheit 2', einen Antriebsmotor 3' sowie eine Kontaktierungseinheit 4'. Die Getriebeeinheit 2' unterscheidet sich von der Getriebeeinheit 2 gemäß Fig. 1 dadurch, dass die erste Schnittstelle 12 zur Aufnahme des Antriebsmotors 3' im Wesentlichen auf die Ausnehmung 12 reduziert ist, über welche der Triebling 13 mit dem Zahnrad 6 nach Montage zusammenwirkt. Ein weiterer und wesentlicher Unterschied ist die Ausgestaltung der zweiten Schnittstelle 18. Diese ist nunmehr im Wesentlichen als eine Ausnehmung 28 ausgestaltet, über die die Getriebeeinheit 2' mit der abgeänderten Kontaktierungseinheit 4' lösbar verbunden werden kann. Dabei umfasst die Kontaktierungseinheit 4' einen nunmehr mit ihr fest verbundenen Hallsensor 20 und eine Zahnscheibe 21 sowie die Verbindungsleitung 23 zum Steckkontakt 14.

Bei der Montage der Kontaktierungseinheit 4' an der Getriebeeinheit 2' wird somit zum einen die elektrische Kontaktierung mit dem Bestromungseingang des Antriebsmotors 3' realisiert. Zum anderen gelangt die Zahnscheibe 21 mit dem Zahnrad 6 in Wirkverbindung, so dass der der Kontaktierungseinheit 4' zugeordnete Hallsensor 20 wiederum die Drehbewegung des Zahnrads 6 detektieren kann. Mit der dargestellten Antriebseinheilt 1' lassen sich verschiedene kundenspezifische Antriebselektrüniken, die sich beispielsweise in der Art der Regelung oder des eingesetzten Hallsensors 20 unterscheiden, für eine vorgegebene Getriebeeinheit 2' realisieren. Auch können leicht verschiedene Antriebsmotoren 3' eingesetzt werden, auf die dann die Regelelektronik 25 der Kontaktierungseinheit 4' angepasst ist. Die Steckeranschlüsse 26 und 27 sind identisch Fig. zu 1 aufgebaut.

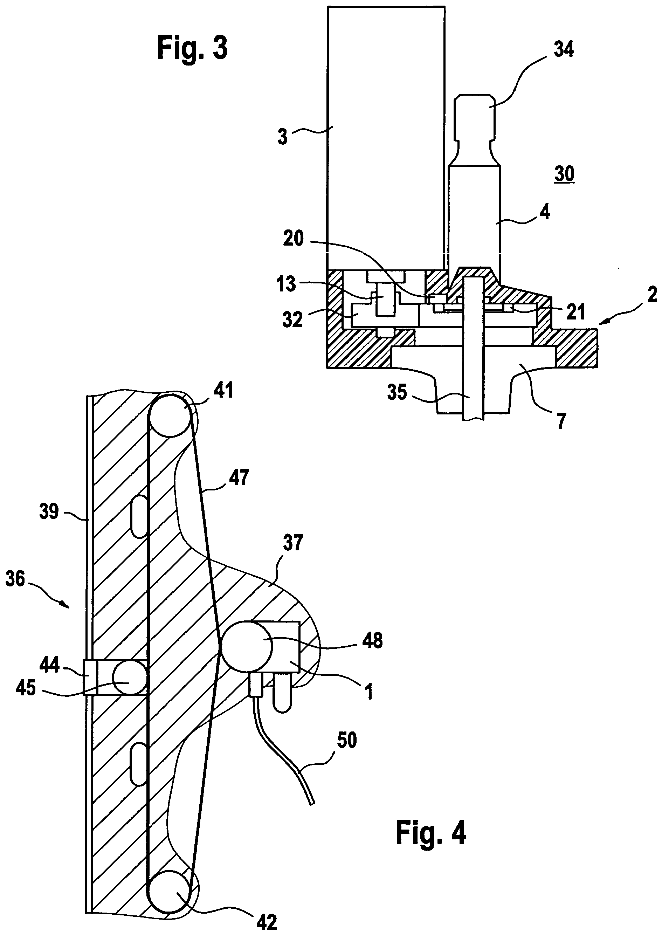

Fig. 3 zeigt eine gegenüber den Figuren 1 und 2 abgeänderte Bauform einer Antriebseinheit 30. Man erkennt in der schematischen Darstellung zunächst wiederum die Getriebeeinheit 2, den Antriebsmotor 3 sowie die Kontaktierungseinheit 4. Die Kontaktierungseinheit 4 weist für einen externen Anschluss einen Stecker 34 auf.

Bei der hier dargestellten Getriebeeinheit 2 greift der Triebling 13 über ein aufgesetztes Zahnrad 32 wiederum in das Zahngetriebe, gebildet aus den Getriebeelementen 7, ein.

Um einen kleinen Bauraum zu erhalten, ist die Kontaktierungseineit 4 direkt oberhalb der Abtriebswelle 35 der Getriebeeinheit 2 aufgesetzt. Dort erkennt man die Zahnscheibe 21, die mit einem Getriebeelement gekoppelt ist, so dass deren Drehung von dem Hallsensor 20 detektiert werden kann. Die elektrische Verbindung zwischen der Kontaktierungseinheit 4 und dem Antriebsmotor 3 ist nicht eingezeichnet.

In Fig. 4 ist schematisch ein Fensterhebersystem 36 dargestellt, wie es in der Seitentür eines Kraftfahrzeugs eingesetzt wird. Das Fensterhebersystem 36 besteht hierbei aus einer Tragkonstruktion 37, auf welcher eine Führungsschiene 39 montiert sowie Umlenkrollen 41 und 42 drehbeweglich gelagert sind. Auf der Führungsschiene 39 ist verschiebbar ein Fensterhalter 44 aufgesetzt, der über eine Klemmrolle 45 fest mit einem die Umlenkrollen 41, 42 umlaufenden Seil 47 verbunden ist.

Zum Antrieb des Seils 47 ist auf der Tragkonstruktion 37 weiter die Antriebseinheit 1 montiert, deren Abtriebswelle fest mit einer Seiltrommel 48 verbunden ist. Dabei ist das Seil 47 um die Seiltrommel 48 gewickelt, so dass bei einer Drehung der Seiltrommel 48 das Seil 47 je nach Drehrichtung die Umlenkrollen 41 und 42 umläuft. Dabei wird der Fensterhalter 44 entlang der Führungsschiene 39 entweder nach oben oder nach untern bewegt.

**Bezugszeichenliste**

| | | | |
|---|---|---|---|
| 1,1' | Antriebseinheit | 27 | Steckeranschluss Steuerung |
| 2,2' | Getriebeeinheit | 28 | Ausnehmung |
| 3,3' | Antriebsmotor | 30 | Antriebseinheit |
| 4,4' | Kontaktierungseinheit | 32 | Zahnrad |
| 6 | Zahnrad | 34 | Stecker |
| 7 | Getriebeelemente | 35 | Abtriebswelle |
| 9 | Vielnutprofil (Abtrieb) | 36 | Fensterhebersystem |
| 11 | erste Schnittstelle | 37 | Tragkonstruktion |
| 12 | Ausnehmung | 39 | Führungsschiene |
| 13 | Triebling | 41,42 | Umlenkrollen |
| 14 | Steckkontakt | 44 | Fensterhalter |
| 16 | Kontaktelement | 45 | Klemmrolle |
| 18 | zweite Schnittstelle | 47 | Seil |
| 20 | Hallsensor | 48 | Seiltrommel |
| 21 | Zahnscheibe | 50 | Anschlussleitung |
| 23 | elektrische Verbindung | | |
| 25 | Regelelektronik | | |
| 26 | Steckeranschluss Bestromung | | |

## Patentansprüche

1. Antriebseinheit (1,1',30), insbesondere für ein Stellelement eines Kraftfahrzeugs, mit einer Getriebeeinheit (2,2'), einem Antriebsmotor (3,3') und einer Kontaktierungseinheit (4,4'), wobei die Getriebeeinheit (2,2') eine erste Schnittstelle (11) zur lösbaren Befestigung des Antriebsmotors (3,3') und eine zweite Schnittstelle (18) zur lösbaren Befestigung der Kontaktierungseinheit (4,4') umfasst, und wobei im montierten Zustand der Antriebsmotor (3,3') über die Kontaktierungseinheit (4,4') bestromt wird, wobei die Schnittstellen (11,18) der Getriebeeinheit (2,2') zur Bestromung des Antriebsmotors (3,3') über die Kontaktierungseinheit (4,4') ausgebildet sind, und dass ein die Umdrehung eines Getriebedrehelements (z.B. 6) erfassender, mit der Kontaktierungseinheit (4,4') kontaktierbarer Drehsensor vorgesehen ist,
**dadurch gekennzeichnet,**
**dass** dem Getriebedrehelement (z.B. 6) eine Zahnscheibe (21) zugeordnet ist und dass der Drehsensor ein Hallsensor (20) ist, der eine Änderung der Permeabilität bei Drehung der Zahnscheibe (21) erfasst.

2. Antriebseinheit (1,1',30) nach Anspruch 1,
**dadurch gekennzeichnet,**
**dass** die Schnittstellen (11,18) der Getriebeeinheit (2,2') zur Bestromung des Antriebsmotors (3,3') elektrisch miteinander verbunden sind.

3. Antriebseinheit (1,1',30) nach Anspruch 1 oder 2,
**dadurch gekennzeichnet,**
**dass** der Drehsensor an der Kontaktierungseinheit (4,4') befestigt und mit dieser kontaktiert ist, und dass die zweite Schnittstelle (18) der Getriebeeinheit (2,2') zur Aufnahme des Drehsensors ausgebildet ist.

4. Antriebseinheit (1,1',30) nach einem der vorhergehenden Ansprüche,
**dadurch gekennzeichnet,**
**dass** die Zahnscheibe (21) Teil der Kontaktierungseinheit (4,4') ist, und dass die Zahnscheibe (21) nach Montage der Kontaktierungseinheit (4,4') mit dem Getriebedrehelement (z.B. 6) zusammenwirkt.

5. Antriebseinheit (1,1',30) nach einem der vorhergehenden Ansprüche,
**dadurch gekennzeichnet,**
**dass** die Kontaktierungseinheit (4,4') einen Anschluss für eine externe Speiseleitung umfasst.

6. Antriebseinheit (1,1',30) nach einem der vorhergehenden Ansprüche,
**dadurch gekennzeichnet,**
**dass** in die Kontaktierungseinheit (4,4') eine mit dem Drehsensor verbindbare Steuer- und/oder Regelelektronik (25) integriert ist.

7. Verwendung einer Antriebseinheit (1,1',30) gemäß einem der vorhergehenden Ansprüche zum Antrieb eines Stellelements in einem Kraftfahrzeug.

8. Verwendung nach Anspruch 7,
wobei das Stellelement ein elektrisches Fensterhebersystem (36) ist.

## Claims

1. Drive unit (1, 1', 30), in particular for an actuating element of a motor vehicle, having a gear unit (2,2'), a drive motor (3,3') and a contacting unit (4,4'), wherein the gear unit (2,2') comprises a first interface (11) for detachably fixing the drive motor (3,3') and a second interface (18) for detachably fixing the contacting unit (4,4'), and wherein, in the mounted state, the drive motor (3,3') is energised via the contacting unit (4,4'), wherein the interfaces (11, 18) of the gear unit (2,2') are formed to energise the drive motor (3,3') via the contacting unit (4,4'), and that a rotating sensor that detects the rotation of a gear rotation element (e.g. 6) and is able to be contacted by the contacting unit (4,4') is provided,
**characterised in that**
a tooth lock washer (21) is allocated to the gear rotation element (e.g. 6) and the rotating sensor is a Hall sensor (20), which detects a change of permeability when rotating the tooth lock washer (21).

2. Drive unit (1,1',30) according to claim 1,
**characterised in that**
the interfaces (11, 18) of the gear unit (2,2') are electrically connected to each other to energise the drive motor (3,3').

3. Drive unit (1,1',30) according to claim 1 or 2,
**characterised in that**
the rotating sensor is fixed to the contacting unit (4,4') and is contacted by this, and the second interface (18) of the gear unit (2,2') is formed for receiving the rotating sensor.

4. Drive unit (1,1',30) according to one of the preceding claims,
**characterised in that**
the tooth lock washer (21) is part of the contacting unit (4,4'), and the tooth lock washer (21) interacts with the gear rotation element (e.g. 6) after mounting the contacting unit (4,4').

5. Drive unit (1,1',30) according to one of the preceding claims,
**characterised in that**
the contacting unit (4,4') comprises a connection for an external feed line.

6. Drive unit (1,1',10) according to one of the preceding claims,
**characterised in that**
a control and/or regulating electric system (25) that is able to be connected to the rotating sensor is integrated into the contacting unit (4,4').

7. Use of a drive unit (1,1',30) according to one of the preceding claims for driving an actuating element in a motor vehicle.

8. Use according to claim 7,
wherein the actuating element is an electric window system (36).

## Revendications

1. Unité d'entraînement (1, 1', 30), notamment destinée à un élément de réglage d'un véhicule automobile, comprenant une unité de transmission (2, 2'), un moteur d'entraînement (3, 3') et une unité de connexion (4, 4'), unité d'entraînement
dans laquelle l'unité de transmission (2, 2') comporte une première interface (11) pour la fixation amovible du moteur d'entrainement (3, 3'), et une deuxième interface (18) pour la fixation amovible de l'unité de connexion (4, 4'), et
dans laquelle, dans l'état monté, le moteur d'entraînement (3, 3') est alimenté en courant par l'intermédiaire de l'unité de connexion (4, 4'),
dans laquelle les interfaces (11, 18) de l'unité de transmission (2, 2') sont configurées pour assurer l'alimentation en courant du moteur d'entraînement (3, 3') par l'intermédiaire de l'unité de connexion (4, 4'), et
dans laquelle il est prévu un capteur de rotation pouvant être connecté à l'unité de connexion (4, 4') et relevant la rotation d'un élément tournant de transmission (par exemple 6),
**caractérisée**
**en ce qu'**à l'élément tournant de transmission (par exemple 6) est associé un disque denté (21), et en ce que le capteur de rotation est un capteur à effet Hall (20), qui relève une variation de la perméabilité lors de la rotation du disque denté (21).

2. Unité d'entraînement (1, 1', 30) selon la revendication 1,
**caractérisée**
**en ce que** les interfaces (11, 18) de l'unité de transmission (2, 2') sont reliées électriquement l'une à l'autre pour l'alimentation en courant du moteur d'entrainement (3, 3').

3. Unité d'entrainement (1, 1', 30) selon la revendication 1 ou la revendication 2,
**caractérisée**
**en ce que** le capteur de rotation est fixé sur l'unité de connexion (4, 4') et est connecté à celle-ci, et en ce que la deuxième interface (18) de l'unité de transmission (2, 2') est configurée pour accueillir le capteur de rotation.

4. Unité d'entrainement (1, 1', 30) selon l'une des revendications précédentes,
**caractérisée**
**en ce que** le disque denté (21) fait partie de l'unité de connexion (4, 4'), et en ce que le disque denté (21), après montage de l'unité de connexion (4, 4'), interagit avec l'élément tournant de transmission (par exemple 6).

5. Unité d'entrainement (1, 1', 30) selon l'une des revendications précédentes,
**caractérisée**
**en ce que** l'unité de connexion (4, 4') comporte un raccord de branchement pour une ligne d'alimentation externe.

6. Unité d'entrainement (1, 1', 30) selon l'une des revendications précédentes,
**caractérisée**
**en ce qu'**à l'unité de connexion (4, 4') est intégrée une électronique de commande et/ou de régulation (25) pouvant être reliée au capteur de rotation.

7. Utilisation d'une unité d'entrainement (1, 1', 30) selon l'une des revendications précédentes, pour entraîner un élément de réglage dans un véhicule automobile.

8. Utilisation selon la revendication 7,
d'après laquelle l'élément de réglage est un système de lève-vitre électrique (36).
